# EUROPEAN PATENT APPLICATION

(11) **EP 2 604 979 A2**
(43) Date of publication of application: **19.06.2013**
(21) Application number: 12189135.2
(22) Date of filing: 18.10.2012
(51) Int. Cl.: G01C 21/36, G01C 21/34, B60R 16/023

(54) **Evaluation Display System, Method, and Computer-Readable Storage Medium**

(30) Priority: 15.12.2011 JP 2011274386
(71) Applicant: AISIN AW CO., LTD., Anjo-shi, Aichi 444-1192 (JP)
(72) Inventor: Uchida, Toshio, Anjo-shi, Aichi 444-1192 (JP); Sakai, Toru, Anjo-shi, Aichi 444-1192 (JP); Miura, Naoki, Anjo-shi, Aichi 444-1192 (JP)
(74) Representative: Kramer - Barske - Schmidtchen

(57) **Abstract**

This invention relates to an evaluation display system which comprises a map display control unit that displays a current position of a vehicle and a map around the current position on a display unit; a current evaluation acquisition unit that acquires a current evaluation indicating a fuel efficiency evaluation of each unit interval in a current travel of the vehicle; and a past evaluation acquisition unit that acquires a past evaluation indicating a fuel efficiency evaluation of the each unit interval in a past travel that is earlier than the current travel. The map display control unit displays the current evaluation and the past evaluation of the each unit interval on the map and, if a distance between the current position of the vehicle and a display position of at least one past evaluation on the map becomes equal to or smaller than a predetermined distance, erases the at least one past evaluation from the map.

## Description

### INCORPORATION BY REFERENCE

The disclosure of Japanese Patent Application No. 2011-274386 filed on December 15, 2011 including the specification, drawings and abstract is incorporated herein by reference in its entirety.

### BACKGROUND OF THE INVENTION

### 1. Field of the Invention

The present invention relates to an evaluation display system, method, and computer-readable storage medium for displaying the fuel efficiency evaluation of a vehicle.

### 2. Description of the Related Art

Conventionally, various technologies have been developed for displaying information for improving the fuel efficiency of a vehicle. For example, Japanese Patent Application Publication No. 2011-33447 (JP 2011-33447A) describes a technology for displaying information indicating that the vehicle's energy consumption has exceeded the reference value in association with a location in the route along which the vehicle has traveled. Japanese Patent Application Publication No. 2004-251786 (JP 2004-251786A) describes a technology for displaying information that allows the driver to compare, for each interval, the current fuel efficiency and the average of the past fuel efficiencies. In addition, Japanese Patent Application Publication No. 2002-350152 (JP 2002-350152A) describes a technology for displaying the fuel efficiency evaluation (good, ordinary, bad) of a past travel for each location or each route on the map as well as the current fuel efficiency evaluation of the vehicle's current position.

### SUMMARY OF THE INVENTION

In the conventional technologies described above, it is difficult to make a significant comparison based on the fuel efficiency evaluation in the current travel and the fuel efficiency evaluation in the past travel. In the technology described in Japanese Patent Application Publication No. 2011-33447 (JP 2011-33447A) and Japanese Patent Application Publication No. 2004-251786 (JP 2004-251786A), the fuel efficiency in the current travel is compared with the reference value or with the average of the past fuel efficiencies. That is, these technologies evaluate the fuel efficiency in the current travel but neither evaluate nor display the fuel efficiency evaluation in the past travel. Therefore, during driving, the vehicle's driver cannot compare the fuel efficiency evaluation in the past travel and the fuel efficiency evaluation in the current travel. This means that the driver cannot determine whether fuel consumption can be conserved in the current travel by improving the driving in the route after the vehicle's current position.

In the technology described in Japanese Patent Application Publication No. 2002-350152 (JP 2002-350152A), the fuel efficiency evaluation in the past travel is displayed for each location but, for the fuel efficiency evaluation in the current travel, only the momentary value of the current position is displayed. Because it is practically impossible for the driver to continuously pay attention to the momentary value during driving for conserving fuel consumption, the driver cannot determine whether the fuel efficiency in the current travel is continuously good. Therefore, in the technology described in Japanese Patent Application Publication No. 2002-350152 (JP 2002-350152A), the vehicle's driver cannot compare the fuel efficiency evaluation in the past travels and the fuel efficiency evaluation in the current travel during driving. This means that it is practically impossible to determine whether the driving can be further improved after the vehicle's current position by considering the fuel consumption before the vehicle's current position in the current travel. Therefore, conventionally, it is extremely difficult to conserve fuel consumption by improving the driving in the current travel.

When both the fuel efficiency evaluation in the current travel and the fuel efficiency evaluation in the past travel are displayed on the map, the driver finds it difficult to distinguish between these evaluations if they are mixed in the same interval. The fuel efficiency evaluation in the past travel serves as the guideline for improving the fuel efficiency evaluation in the current travel. On the other hand, if the fuel efficiency evaluation in the past travel is displayed for an interval for which the vehicle has traveled in the current travel, the amount of information displayed on the map is too much. The evaluation information, if displayed in this way, makes it difficult for the driver to compare the fuel efficiency evaluation in the current travel and the fuel efficiency evaluation in the past travel.

The present invention provides an evaluation display system, method, and computer-readable storage medium for making it easy to compare the fuel efficiency evaluation in the current travel and the fuel efficiency evaluation in the past travel.

A first aspect of the present invention relates to an evaluation display system. The evaluation display system includes: a map display control unit that displays a current position of a vehicle and a map around the current position on a display unit; a current evaluation acquisition unit that acquires a current evaluation indicating a fuel efficiency evaluation of each unit interval in a current travel of the vehicle; and a past evaluation acquisition unit that acquires a past evaluation indicating a fuel efficiency evaluation of the each unit interval in a past travel that is earlier than the current travel, wherein the map display control unit displays the current evaluation and the past evaluation of the each unit interval on the map and, if a distance between the current position of the vehicle and a display position of at least one past evaluation on the map becomes equal to or smaller than a predetermined distance, erases the at least one past evaluation from the map.

A second aspect of the present invention relates to an evaluation display method. The evaluation display method includes: displaying a current position of a vehicle and a map around the current position on a display unit; acquiring a current evaluation indicating a fuel efficiency evaluation of each unit interval in a current travel of the vehicle; acquiring a past evaluation indicating a fuel efficiency evaluation of the each unit interval in a past travel that is earlier than the current travel; displaying the current evaluation and the past evaluation of the each unit interval on the map; and if a distance between the current position of the vehicle and a display position of at least one past evaluation on the map becomes equal to or smaller than a predetermined distance, erasing the at least one past evaluation from the map.

A third aspect of the present invention relates to a non-transitory computer-readable storage medium that stores computer-executable instructions for performing an evaluation display function. The evaluation display function includes: displaying a current position of a vehicle and a map around the current position on a display unit; acquiring a current evaluation indicating a fuel efficiency evaluation of each unit interval in a current travel of the vehicle; acquiring a past evaluation indicating a fuel efficiency evaluation of the each unit interval in a past travel that is earlier than the current travel; displaying the current evaluation and the past evaluation of the each unit interval on the map; and if a distance between the current position of the vehicle and a display position of at least one past evaluation on the map becomes equal to or smaller than a predetermined distance, erasing the at least one past evaluation from the map.

According to the above configurations, both current evaluations and past evaluations are displayed on the map so that the driver can view them at the same time. In addition, if the distance between the current position of a vehicle and the display position of a past evaluation becomes equal to or smaller than a predetermined distance as the current position of the vehicle approaches the positions of past evaluations displayed on the map, the past evaluations are erased sequentially. The current evaluation, a fuel efficiency evaluation in the current travel, is displayed in each of the unit intervals over which the vehicle traveled in the current travel. A past evaluation displayed at a position distant from the current position of the vehicle more than the predetermined distance is not erased with the result that the past evaluations remain displayed in the unit intervals at which the vehicle has not yet arrived in the current travel. As a result, past evaluations are not displayed and current evaluations are displayed in the unit intervals over which the vehicle has already traveled in the current travel. On the other hand, past evaluations are displayed in the unit intervals at which the vehicle has not yet arrived in the current travel. Displaying current evaluations and past evaluations in this way allows the driver to drive while comparing the current evaluations in the unit intervals over which the vehicle has already traveled and the past evaluations in the unit intervals at which the vehicle has not yet arrived.

### BRIEF DESCRIPTION OF THE DRAWINGS

The features, advantages, and technical and industrial significance of this invention will be described below with reference to the accompanying drawings, in which like numerals denote like elements, and wherein:
FIG. 1 is a block diagram showing a navigation terminal that includes an evaluation display system;
FIG. 2 is a flowchart showing the evaluation information acquisition processing;
FIGS. 3A and 3B are flowcharts showing the evaluation information display processing;
FIG. 4 is a flowchart showing the past evaluation erasure processing; and
FIG. 5A is a diagram showing an example of a displayed map and FIGS. 5B, 5C and 5D are diagrams showing how an erasure target is selected.

### DETAILED DESCRIPTION OF THE EMBODIMENTS

Embodiments of the present invention will be described below in the following order.
(1) Configuration ofnavigation terminal
(2) Evaluation information acquisition processing
(3) Evaluation information display processing
(4) Past evaluation erasure processing
(5) Other embodiments

### (1) Configuration ofnavigation terminal

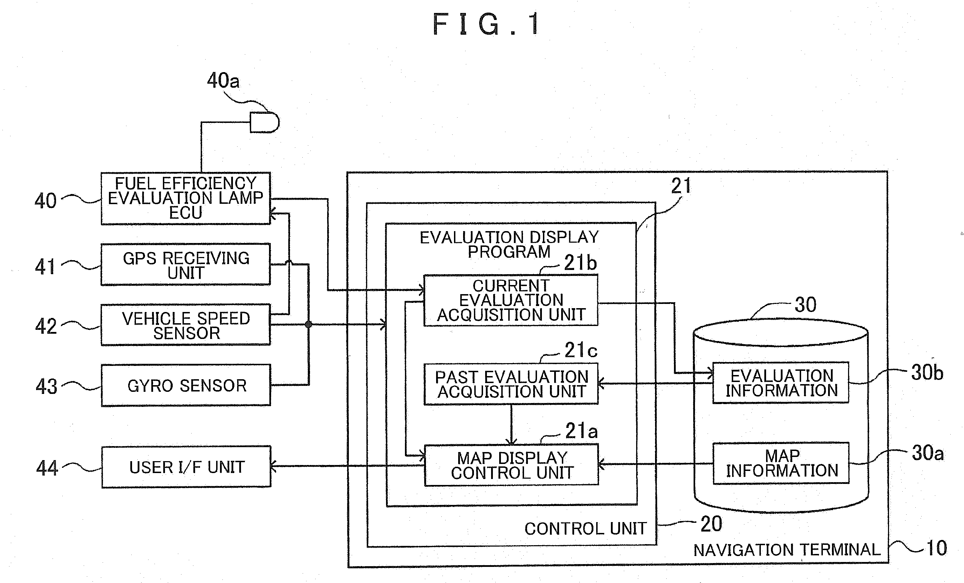

FIG. 1 is a block diagram showing the configuration of an evaluation display system mounted in a vehicle. In this embodiment, the evaluation display system is implemented by a navigation terminal 10. The navigation terminal 10, which includes a control unit 20 that includes a CPU, a RAM, and a ROM, causes the control unit 20 to execute programs stored in the ROM. In this embodiment, the control unit 20 executes the navigation program, one of the programs stored in the ROM. The navigation program causes the control unit 20 to implement the function that displays a map, which includes the vehicle's current position, on the display unit of the navigation terminal 10 for guiding the driver to the destination. The navigation program includes an evaluation display program 21 that causes the control unit 20 to implement the following two functions: one is the function to display current evaluations and past evaluations on the map on the display and the other is the function to erase a past evaluation if the distance between the vehicle's current position and the display position of the past evaluation becomes equal to or smaller than a predetermined distance on the map.

A vehicle in this embodiment includes a fuel efficiency evaluation lamp ECU 40, a GPS receiving unit 41, a vehicle speed sensor 42, a gyro sensor 43, and a user I/F unit 44. The GPS receiving unit 41 receives a radio wave from a GPS satellite and, via the interface not shown, outputs a signal for use in calculating the vehicle's current position. The control unit 20 acquires the signal, output by the GPS receiving unit 41, to acquire the vehicle's current position. The vehicle speed sensor 42 outputs the signal corresponding to the rotation speed of the wheels of the vehicle. The control unit 20 acquires the signal, output by the vehicle speed sensor 42 via the interface not shown, to acquire the vehicle speed. The gyro sensor 43 detects the angular acceleration of the vehicle's turn in the horizontal plane and outputs the signal corresponding to the vehicle direction. The control unit 20 acquires the signal, output by the gyro sensor 43, to acquire the traveling direction of the vehicle. The vehicle speed sensor 42 and the gyro sensor 43 are used to correct the vehicle's current position identified by the output signal of the GPS receiving unit 41. The vehicle's current position is also corrected as necessary based on the traveling path of the vehicle.

The fuel efficiency evaluation lamp ECU 40 includes a control circuit for evaluating the fuel efficiency of a traveling vehicle based on the operation of the vehicle. The fuel efficiency evaluation lamp ECU 40 is connected to a lamp 40a provided on the instrumental panel of the vehicle. In this embodiment, the fuel efficiency evaluation lamp ECU 40 determines whether the combination of three types of information --- (1) the information indicating fuel consumption (for example, information identified by the signal for operating the injector or information indicated by the fuel consumption sensor), (2) the output information from the vehicle speed sensor 42, and (3) the information indicating the transmission state --- satisfies the fuel consumption conservation condition. Various conditions may be defined as the fuel consumption conservation condition. In this embodiment, the fuel efficiency evaluation lamp ECU 40 determines that the fuel consumption conservation condition is satisfied if the amount of fuel consumption is equal to or lower than a predetermined amount, if the vehicle speed is equal to or higher than a predetermined threshold, and if the transmission is in the normal state (the state in the drive mode, or the like, that is not in the state for high-efficiency acceleration such as sports mode).

The fuel efficiency evaluation lamp ECU 40 turns on the lamp 40a if the combination of the information satisfies the fuel consumption conservation condition. This lamp status enables the driver to determine that the fuel consumption is conserved during driving if the lamp 40a is turned on and that too much fuel is consumed during driving if the lamp 40a is turned off. At the same time the lamp 40a is turned on, the fuel efficiency evaluation lamp ECU 40 outputs lamp-on information to the control unit 20 to indicate that the lamp 40a is turned on. This lamp-on information allows the control unit 20 to identify whether the lamp 40a is on or off. In addition, the fuel efficiency evaluation lamp ECU 40 outputs the information, which indicates the fuel consumption described above, to the control unit 20. The control unit 20 can identify the fuel efficiency (km/l) of the vehicle in each position based on the information indicating the fuel consumption.

The user I/F unit 44, an interface unit for receiving an instruction from and providing various information to the driver, includes a display unit composed of a touch panel display not shown, an input unit such as switches, and a voice output unit such as a speaker. The user I/F unit 44 receives a control signal from the control unit 20 and displays various guidance images on the touch panel display.

Map information 30a is stored in a storage medium 30. The map information 30a includes node data indicating the positions of the nodes corresponding to the endpoints of a road in which the vehicle travels, shape interpolation point data indicating the positions of shape interpolation points for identifying the shape of a road between nodes, and link data indicating a link between nodes. In this embodiment, each time the vehicle travels, evaluation information 30b is also stored in the storage medium 30 to indicate the fuel efficiency evaluation of the vehicle. The evaluation information 30b is the lamp-on ratio information indicating the ratio of time at which the above-described lamp 40a is on in an evaluation target interval. When stored during traveling with a destination set, the evaluation information 30b is stored in association with the information indicating the destination and the starting point. An evaluation target interval, an interval included in a unit interval, is an interval for which fuel efficiency is evaluated.

In this embodiment, a travel order number is stored in association with each piece of evaluation information 30b. A travel order number is set in such a way that the later the time at which the vehicle travels in each unit interval, the larger the travel order number is. In addition, each piece of evaluation information 30b includes information indicating the position of each unit interval. Therefore, the control unit 20 can identify the position of a unit interval based on the evaluation information 30b and identify the link, in which the unit interval is present, by referencing the link data included in the map information 30a.

By executing the evaluation display program 21, the control unit 20 displays a map, as well as both current evaluations and past evaluations, on the display unit of the user I/F unit 44 and, as the current position changes, erases a past evaluation. To execute this processing, the evaluation display program 21 includes a map display control unit 21a, a current evaluation acquisition unit 21b, and a past evaluation acquisition unit 21 c.

The map display control unit 21a is a program module that causes the control unit 20 to implement the function to display the vehicle's current position and the map around the current position on the display unit of the user I/F unit 44 and, on that map, the current evaluation and past evaluation of each unit interval as well. In addition, if the distance between the vehicle's current position and the display position of a past evaluation on the map becomes smaller than a predetermined distance, the map display control unit 21a causes the control unit 20 to implement the function to erase the past evaluation from the map. To do so, the control unit 20 identifies the vehicle's current position based on the output signals received from the GPS receiving unit 41, vehicle speed sensor 42, and gyro sensor 43, identifies the display range of the map of the area around the vehicle's current position, and extracts the information on the roads and facilities in the display range from the map information 30a. After that, the control unit 20 outputs the control signal to the display unit of the user I/F unit 44 to draw the vehicle's current position as well as the map indicating the roads and facilities around the vehicle's current position. Upon receiving this control signal, the display unit of the user I/F unit 44 displays the map, which indicates the roads and facilities around the vehicle's current position, and the vehicle's current position.

The current evaluation acquisition unit 21b is a program module that causes the control unit 20 to implement the function to acquire a current evaluation. The current evaluation indicates the fuel efficiency evaluation in each of the unit intervals (in this embodiment, the unit interval is a fixed-distance interval (for example, 100 m)) in the current travel of the vehicle. The control unit 20 executes the evaluation information acquisition processing, which will be described later, via the current evaluation acquisition unit 21 b while the vehicle travels, acquires the lamp-on ratio of the lamp 40a for each unit interval, and stores the lamp-on ratio for each unit interval, in association with its corresponding unit interval position and the travel order number are associated, as the evaluation information 30b. The travel order number, any number used to identify the travel order, may be defined according to one of the various rules. In this embodiment, the control unit 20 associates the firstly acquired evaluation information 30b with the travel order number 1 when the evaluation information 30b is acquired first. After that, each time the evaluation information 30b is newly acquired, the control unit 20 increments the travel order number by 1 and associates the order travel number with the newly acquired evaluation information 30b. The current evaluations and the past evaluations are generated based on the evaluation information 30b generated as described above.

In this embodiment, when the driver operates the user I/F unit 44 to set a destination, the navigation program determines the vehicle's current position, at which the destination is set, as the starting point and searches for a route from the starting point to the destination for guiding the vehicle. While the vehicle travels from the starting point to the destination, the travel from the starting point to the destination is the regarded as the current travel. That is, the current travel interval, the interval in which the vehicle has traveled, is the interval whose starting point is the start-point and the current position is the endpoint. The total distance of the current travel interval increases as the vehicle travels until it arrives at the destination. When the vehicle travels with a destination set and then arrives at the destination, the control unit 20 stores the evaluation information 30b with the evaluation information on each of the unit intervals from the starting point to the destination associated with the starting point and the destination.

Via the processing of the current evaluation acquisition unit 21b, the control unit 20 acquires the evaluation of the current travel from the evaluation information 30b as the current evaluation. To do so, from the time the vehicle starts traveling at the starting point and to the time the vehicle arrives at the destination, the control unit 20 acquires the evaluation information 30b on each unit interval in the current travel interval. The control unit 20 compares the lamp-on ratio (ratio of the distance over which the vehicle travels with the lamp 40a on) of the lamp 40a for each unit interval, indicated by the evaluation information 30b, with a predetermined ratio to acquire the current evaluation for each unit interval. More specifically, if the lamp-on ratio of the lamp 40a is equal to or higher than the predetermined ratio, the control unit 20 sets the fuel efficiency evaluation to "good"; if the lamp-on ratio of the lamp 40a is lower than the predetermined ratio, the control unit 20 sets the fuel efficiency evaluation to "bad". That is, in this embodiment, the higher the lamp-on ratio of the lamp 40a is, the higher the fuel efficiency is. Therefore, the lamp-on ratio of the lamp 40a corresponds to the frequency of driving operations that contribute to the improvement in fuel efficiency and, so, whether the driver performs the driving operation for improving fuel efficiency can be evaluated according to the lamp-on ratio of the lamp 40a. The predetermined ratio may be determined any time before evaluating the fuel efficiency. In this embodiment, the predetermined ratio is set by the driver according to a pre-set diagnostic difficulty level. More specifically, the predetermined ratio is set such that the higher the diagnostic difficulty level is, the higher the predetermined ratio is.

In addition, via the processing of the current evaluation acquisition unit 21b, the control unit 20 in this embodiment acquires the current average fuel efficiency that indicates the average fuel efficiency of the vehicle in the current travel. When the vehicle travels with a destination set, the control unit 20 identifies the fuel efficiency of the vehicle for each position based on the information indicating the fuel consumption from the starting point to the current position and calculates the average of the fuel efficiency of the vehicle for each position. After that, the control unit 20 stores the averaged fuel efficiency (average fuel efficiency) as the evaluation information 30b in association with the starting point and the destination. The average fuel efficiency information included in the evaluation information 30b is serially updated as the vehicle travels. Therefore, before the vehicle arrives at the destination, the average fuel efficiency during the travel from the starting point to a position located before the destination is stored in association with the starting point and the destination. On the other hand, when the vehicle arrives at the destination, the average fuel efficiency during the travel from the starting point to the destination is stored in association with the starting point and the destination.

The past evaluation acquisition unit 21c is a program module that causes the control unit 20 to implement the function to acquire a past evaluation. The past evaluation indicates the fuel efficiency evaluation in each of the unit intervals in a travel before the current travel. In this embodiment, the control unit 20 regards a past travel, whose starting point and the destination are the same as those of the current travel, as the display target past travel of past evaluation. The control unit 20 acquires the evaluation of each of the unit intervals in the past travel interval, in which the vehicle traveled in the past travel, as a past evaluation.

To do so, the control unit 20 acquires from the storage medium 30 the evaluation information 30b indicating the lamp-on ratio of the lamp 40a with which the same starting point and the destination as those of the above-described current travel are associated. If there are multiple pieces of evaluation information 30b each associated with the same starting point and the destination as those of the current travel, the evaluation information 30b associated with the average fuel efficiency satisfying a predetermined condition (for example, evaluation information 30b whose average fuel efficiency is equal to or higher than a predetermined value) may be acquired as the past evaluation. The control unit 20 compares the lamp-on ratio of the lamp 40a with a predetermined ratio. If the lamp-on ratio is equal to or higher than the predetermined ratio, the control unit 20 sets the fuel efficiency evaluation to "good"; if the lamp-on ratio is lower than the predetermined ratio, the control unit 20 sets the fuel efficiency evaluation to "bad". When determining whether the starting point and the destination of the current travel are the same as those of the past travel, a predetermined margin may be allowed for a position, and, for example, if the distance between the two points is 300 m or shorter, the two points may be regarded as the same point.

After the current evaluations and the past evaluations are acquired as described above, the control unit 20 outputs a control signal to the display unit of the user I/F unit 44 to draw the current evaluations and the past evaluations on the map via the processing of the map display control unit 21 a. To display the current evaluations and the past evaluations, the control unit 20 extracts the current travel interval and the past travel interval from the map currently displayed on the display unit of the user I/F unit 44. The control unit 20 identifies the current evaluation and the past evaluation for each unit interval in the current travel interval and the past travel interval and outputs the control signal to the display unit of the user I/F unit 44 to draw the current evaluations and the past evaluations on the map. This signal causes the display unit of the user I/F unit 44 to display the current evaluation and the past evaluation of each unit interval.

After the current evaluations and the past evaluations are displayed as described above, the control unit 20 performs processing for erasing a past evaluation from the map via the processing of the map display control unit 21 a; in this case, the past evaluation to be erased is the one displayed at a position where the distance to the vehicle's current position on the map is equal to or less than a predetermine distance. In this embodiment, the control unit 20 identifies the past evaluation to be erased not only by the distance between vehicle's current position and the display position of the past evaluation. To identify the past evaluation to be erased, the control unit 20 also references the relation between the vehicle's current traveling direction and the vehicle's past traveling direction, in which the vehicle traveled in the unit interval for which the past evaluation was acquired, as well as the travel order number described above.

The control unit 20 identifies a past evaluation, which is displayed at a position where the distance between the vehicle's current position and the display position of the past evaluation on the map is equal to or less than a predetermined distance, as an erasure candidate past evaluation. In addition, for each of the erasure candidate past evaluations, the control unit 20 acquires the traveling direction of the vehicle in a unit interval, for which the erasure candidate past evaluation was acquired, as the past traveling direction and determines whether the past traveling direction matches the current traveling direction. If one erasure candidate past evaluation is identified where the past traveling direction matches the current traveling direction, the control unit 20 sets the identified erasure candidate past evaluation as the erasure target past evaluation. If two or more erasure candidates, whose past traveling direction matches the current traveling direction, are identified, the control unit 20 sets the erasure candidate past evaluation with the smallest travel order number as the erasure target past evaluation.

In this embodiment, if the link indicating the road, which includes a unit interval for which a past evaluation was acquired, matches the link indicating the road which includes the vehicle's current position, it is supposed that the past traveling direction matches the current traveling direction. That is, if the links match, the traveling directions are supposed to match. More specifically, the control unit 20 identifies the position of a unit interval with which the erasure candidate past evaluation is associated and, by referencing the map information 30a, identifies the link indicating the road, which includes the position of the unit interval, as the past evaluation link. This past evaluation link is information indirectly indicating the past traveling direction. In addition, the control unit 20 references the map information 30a and identifies the link that indicating the road, which includes the vehicle's current position, as the current position link. This current position link is information indirectly indicating the current traveling direction. Therefore, the control unit 20 determines whether the current traveling direction matches the past traveling direction by determining whether the past evaluation link matches the current position link.

If one erasure candidate past evaluation is identified where the current traveling direction matches the past traveling direction, the control unit 20 sets the erasure candidate past evaluation as the erasure target past evaluation. If two or more erasure candidate past evaluations are identified where the past traveling direction matches the current traveling direction, the control unit 20 references the evaluation information 30b indicating the erasure candidate past evaluations and, in the evaluation information 30b, identifies the travel order numbers associated with the erasure candidate past evaluations. Among those erasure candidate past evaluations, the control unit 20 sets the erasure candidate past evaluation associated with the smallest travel order number, that is, the oldest erasure candidate past evaluation, as the erasure target past evaluation. The control unit 20 outputs the control signal to the display unit of the user I/F unit 44 to erase the erasure target past evaluation displayed on the map. This signal causes the display unit of the user I/F unit 44 to erase the erasure target past evaluation.

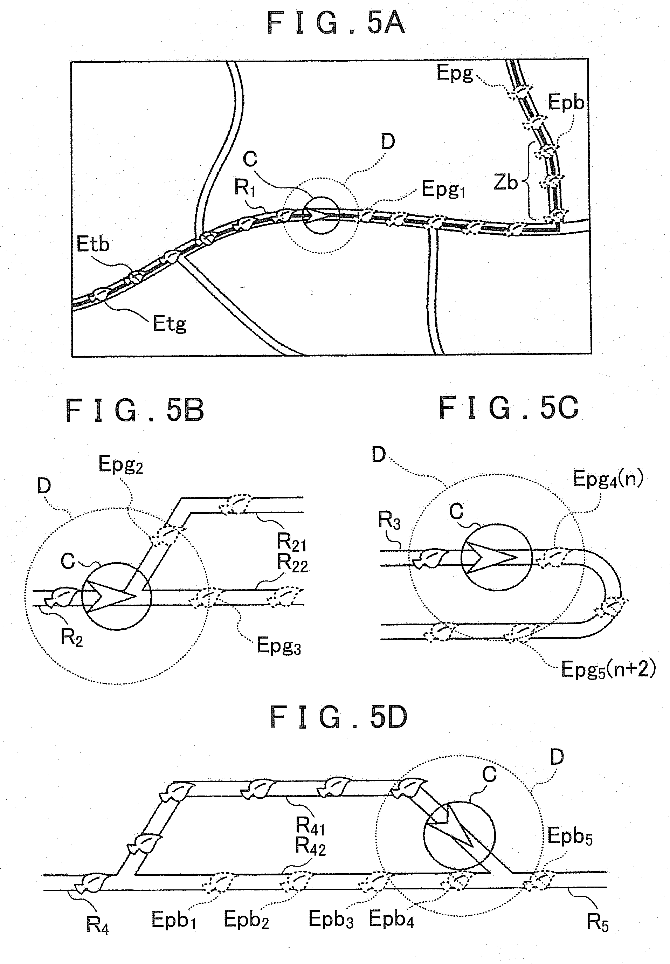

FIG. 5A shows an example of the map displayed on the display unit. In this example, the icon C indicating the vehicle's current position is displayed on road R1 indicated by the solid curved line. In the example shown in FIG. 5A, the fuel efficiency evaluation is displayed by a leaf-shaped icon on the road. The solid line icon Etg indicates the current evaluation that is "good" in evaluation, the solid-line hatched icon Etb indicates the current evaluation that is "bad" in evaluation, the broken line icon Epg indicates the past evaluation that is "good" in evaluation, and the broken-line hatched icon Epb indicates the past evaluation that is "bad" in evaluation. The bold line shown on road R1 indicates the planned travel route via which the vehicle travels from the starting point to the destination in the current travel. In the example shown in FIG. 5A, the route in the past travel, whose starting point and the destination are the same as those of the current travel and whose average fuel efficiency satisfies a predetermined condition, matches the route in the current travel. Therefore, on the road before the vehicle, the past evaluations are displayed on the current planned route indicated by the bold line.

In this embodiment, both the current evaluations and the past evaluations are displayed on the map displayed on the display unit of the user I/F unit 44 as described above so that the driver can view the current evaluations and the past evaluations at the same time. This display allows the driver to drive while easily comparing the fuel efficiency evaluation in the current travel interval and the fuel efficiency evaluation in the past travel interval. Because the current evaluations and the past evaluations are displayed on the map in different modes (solid line and broken line) as shown in the example in FIG. 5A, the driver can clearly distinguish between the current evaluations and the past evaluations without confusion.

Note that a current evaluation is a fuel efficiency evaluation for each unit interval. Therefore, when the vehicle keeps on traveling and the interval over which the vehicle has traveled in the current travel extends across multiple unit intervals on the map, the current evaluations are displayed on the map for the multiple unit intervals, one for each. On the other hand, a past evaluation is also a fuel efficiency evaluation for each unit interval. Because it is unlikely that the vehicle traveled only in one unit interval in the past, the past evaluations are displayed also for multiple unit intervals, one for each. Therefore, the driver can recognize the past evaluations over the multiple unit intervals.

Another advantage of this embodiment is that the current evaluation and the past evaluation are displayed for each unit interval on the map, but not overlapped with each other in the same interval. This display mode allows the driver to drive while comparing the current evaluation and the past evaluation over multiple unit intervals. In general, the driver cannot always view the display unit during traveling but intermittently views the information displayed on the display unit. In such a situation, if the current evaluation and the past evaluation are mixed in the same unit interval, it is difficult for the driver to distinguish between the current evaluation and the past evaluation to correctly understand them. To address this problem, the display unit in this embodiment displays the current evaluation for a unit interval in which the vehicle has travelled in the current travel, and the past evaluation for a unit interval in which the vehicle has not yet traveled in the current travel. This display method enables the driver to quickly understand the current evaluations and past evaluations for multiple unit intervals while clearly distinguishing between them. Therefore, by comparing the current evaluations with the past evaluations in the unit intervals in which the driver is to travel after the vehicle's current position, the driver can drive with guidelines determined for the interval, in which the vehicle is to travel, according to the degree of the total fuel consumption in the current travel.

In addition, the vehicle's current position C on the map moves as the actual current position of the vehicle changes (in this embodiment, the map scrolls). Therefore, in the state such as the one shown in FIG. 5A where a current evaluation is displayed for a unit interval in which the vehicle has already traveled in the current travel and where a past evaluation is displayed for a unit interval in which the vehicle has not yet traveled in the current travel, the positional relation on the map between the vehicle's current position C and a past evaluation changes. As the vehicle continues traveling, the vehicle's current position C on the map approaches the display position of the immediately preceding past evaluation and, eventually, the distance between the vehicle's current position and the display position of the immediately preceding past evaluation becomes a predetermined distance or smaller.

In FIG. 5A, the broken line circle indicates the range D within a predetermined distance from the vehicle's current position C. In FIG. 5A, the past evaluation indicated by the icon Epg₁ is included in the range D within a predetermined distance from the vehicle's current position C. Therefore, in the example shown in FIG. 5A, the past evaluation indicated by the icon Epg₁ is set as the erasure candidate past evaluation. When the vehicle continues traveling, the past evaluations located before the vehicle sequentially become an erasure candidate past evaluation as the vehicle advances.

In addition, the past traveling direction is identified in the example shown in FIG. 5A by identifying the link indicating the road in which the display position of the past evaluation, indicated by the icon Epg₁, is present. The current traveling direction is also identified by identifying the link indicating the road in which the vehicle's current position C is present. As shown in the example in FIG. 5A, if there is no intersection immediately before the vehicle's current position and if there is no other parallel road near the vehicle's current position, there is only one erasure candidate past evaluation where the past traveling direction matches the current traveling direction. In FIG. 5A, there is no branch between the vehicle's current position C and the icon Epg₁. In this case, when the vehicle keeps traveling and, eventually, the icon Epg₁ becomes included in the range D within a predetermined distance or smaller from the vehicle's current position C, the icon Epg₁ is erased upon determination that the past traveling direction matches the current traveling direction.

On the other hand, FIG. 5B shows an example of the map of road R₂ that branches into two roads, R₂₁ and R₂₂, at the intersection. In FIG. 5B, too, the vehicle's current position C is indicated on the road R₂, the current evaluations are indicated by the solid line, the past evaluations are indicated by the broken line, and the range D within a predetermined distance from the vehicle's current position C is indicated by the broken line circle. In FIG. 5B, the average fuel efficiency in multiple past travels is assumed to satisfy a predetermined condition and the past evaluations are displayed for both roads, R₂₁ and R₂₂. In such a case, the display positions of multiple past evaluations may be included in the range D within a predetermined distance from the vehicle's current position C.

In FIG. 5B, the past evaluation icons Epg₂ and Epg₃ are included in the range D within a predetermined distance from the vehicle's current position C. Therefore, both icons Epg₂ and Epg₃ become an erasure candidate icon. After that, when the vehicle passes the intersection and enters the road R₂₁, the link indicating the road in which the vehicle is present matches the link of the road in which the display position of the icon Epg₂ is present. This indicates that the past traveling direction, which corresponds to the past evaluation indicated by the icon Epg₂, is supposed to match the current traveling direction. In this case, the current traveling direction is not supposed to match the past traveling direction that corresponds to the past evaluation indicated by the icon Epg₃. Therefore, when one erasure candidate past evaluation, in which the past traveling direction matches the current traveling direction, is identified as described above, the icon Epg₂ becomes an erasure target icon. Similarly, when the vehicle passes the intersection and enters the road R₂₂, the icon Epg₂ does not become an erasure target icon but the icon Epg₃ becomes an erasure target icon. As a result, each of the past evaluations immediately preceding the vehicle is sequentially erased.

If past evaluations are displayed for multiple routes or if the vehicle travels in a road whose traveling direction changes greatly in a narrow range (for example, hairpin curve road), the multiple past evaluations may be displayed in a narrow range. In such a state, if an erasure target past evaluation is determined based only on the distance between the display position of a past evaluation and the vehicle's current position on the map, the past evaluation immediately preceding the vehicle's current position may not be erased. To address this problem, a past evaluation is erased from the map in this embodiment if the distance between the vehicle's current position and the display position of the past evaluation becomes a predetermine distance or smaller and if the past traveling direction, which corresponds to the past evaluation, matches the current traveling direction of the vehicle. This erasure method increases the probability of erasing the past evaluation nearest to the vehicle's current position and relieves the driver's uncomfortable feeling caused by the erasure of a past evaluation.

FIG. 5C shows another example of the map of the road R₃ that includes a sharp curve such as the one in the entry/exit lane of a toll road or in a ridge road. In FIG. 5C, the vehicle's current position C is indicated in the road R₃, the current evaluations are indicated by the solid line, the past evaluations are indicated by the broken line, and the range D within a predetermined distance from the vehicle's current position C is indicated by the broken-line circle. When the vehicle travels in a road where the traveling direction changes greatly in a narrow range such as the curve shown in FIG. 5C, multiple past evaluations may be displayed in a narrow range. FIG. 5C shows an example in which the past evaluation icons Epg₄ and Epg₅ are included in the range D. In this example, the past evaluation icons Epg₄ and Epg₅ are erasure candidate icons.

Because a link is usually set with an intersection as the endpoint in the general map information 30a, the continuous road, such as the one shown in FIG. 5C, is represented as one link. Therefore, in this embodiment, the display positions of the past evaluation icons Epg₄ and Epg₅ and the vehicle's current position C are included in one link in the map information 30a. In such a case, the control unit 20 determines that the erasure candidate icons, where the past traveling direction and the current traveling direction match, are the two icons, Epg₄ and Epg₅.

In the example shown in FIG. 5C, the control unit 20 determines the erasure candidate icon according to the travel order number. In FIG. 5C, a travel order number enclosed in parentheses is added to the symbol representing an icon. For example, the travel order number of the icon Epg₄ is n (n is a natural number), and the travel order number of the icon Epg₅ is n+2. In this state, the control unit 20 selects an icon, whose travel order number is the minimum, from the icons, Epg₄ and Epg₅, as the erasure target icon. Therefore, in the example shown in FIG. 5C, the icon Epg₄ is selected as the erasure target icon. This determination method allows the past evaluation, which appears immediately preceding the vehicle, to be erased sequentially, thus relieving the driver's uncomfortable feeling.

According to the processing described above, the past evaluations are sequentially erased, one at a time, when the immediately preceding past evaluation in front of the vehicle's current position comes into the range within a predetermined distance from the vehicle's current position. As a result, in the unit intervals in which the vehicle has already traveled in the current travel, not the past evaluations but current evaluations are displayed. On the other hand, in the unit intervals in which the vehicle has not yet traveled in the current travel, the past evaluations are displayed. Therefore, the driver can drive while comparing the current evaluations in the unit intervals, in which the vehicle has already traveled, and the past evaluations in the unit intervals at which the vehicle has not yet arrived.

If the starting point and the destination of the current travel are the same as those of a past travel, the navigation program usually searches for the same route. If the same route is used for the current travel and the past travel, the current evaluation can be compared with the past evaluation in the same route as shown in FIG. 5A. If the same route is used for the current travel and the past travel, the vehicle sequentially travels in the unit intervals, which the vehicle travelled in the past travel, in the current travel. Therefore, the control unit 20 selects the past evaluation sequentially according to the travel order in the past travel and, based on the distance from the vehicle's current position, determines whether to erase each of the past evaluations. In this way, the control unit 20 sequentially erases the past evaluations as the vehicle travels in the current travel.

### (2) Evaluation information acquisition processing

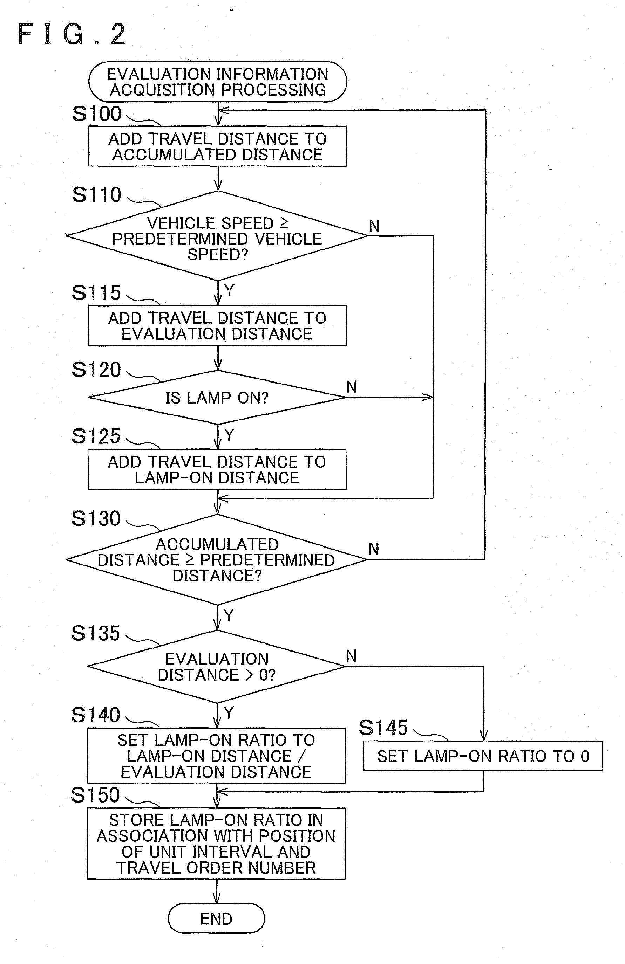

Next, the following describes the evaluation information acquisition processing in detail. FIG. 2 is a flowchart showing the evaluation information acquisition processing. In this embodiment, the control unit 20 executes the evaluation information acquisition processing via the current evaluation acquisition unit 21b after the driver sets a destination and then starts driving. Before the evaluation information acquisition processing is executed, the control unit 20 initializes the following three variables: the variable indicating an accumulated distance used for determining whether the vehicle has traveled a predetermined distance defined as the length of a unit interval, the variable indicating an evaluation distance used for identifying the distance over which fuel efficiency evaluation in a unit interval can be made, and the variable indicating a lamp-on distance used for identifying the distance over which the vehicle traveled with the lamp 40a turned on.

The control unit 20 adds a travel distance to the accumulated distance (step S100). In this embodiment, steps S100 to S130 form a loop process. When the loop processing is repeated, the processing of step S100 is executed at a predetermined interval (for example, 100 ms). In step S100, the control unit 20 identifies the travel distance ΔL, over which the vehicle has traveled from the last execution of step S100 to the current execution of step S100, based on the output signals from the GPS receiving unit 41, vehicle speed sensor 42, and gyro sensor 43, and adds the identified travel distance ΔL to the accumulated distance. In other words, while steps S100 to S130 are repeated, the control unit 20 performs the addition processing so that the value of the total distance, over which the vehicle has traveled, becomes the accumulated distance.

Next, the control unit 20 determines whether the vehicle speed is equal to or higher than a predetermined vehicle speed (step S110). If it is not determined that the vehicle speed is equal to or higher than the predetermined vehicle speed, the control unit 20 skips steps S115 to S125. On the other hand, if it is determined that the vehicle speed is equal to or higher than the predetermined vehicle speed in step S110, the control unit 20 adds the travel distance to the evaluation distance (step S115). That is, the control unit 20 adds the above-described travel distance ΔL, which is added to the accumulated distance in step S100, to the evaluation distance.

The above-mentioned predetermined vehicle speed, which is used as the determination condition for determination in step S110, is defined in advance as a vehicle speed (for example, 4 km/h) below which significant fuel efficiency evaluation cannot be made. That is, if the vehicle speed is extremely low, it is difficult to distinguish between a fuel-conserving driving operation and an extreme fuel-waste driving operation. Therefore, if the vehicle speed is lower than the predetermined vehicle speed, the control unit 20 does not evaluate fuel efficiency. More specifically, if the vehicle speed is lower than the predetermined vehicle speed in this embodiment, the control unit 20 does not execute step S115 assuming that significant fuel efficiency evaluation cannot be made; on the other hand, if the vehicle speed is equal to or higher than the predetermined vehicle speed, the control unit 20 increments the evaluation distance by the travel distance ΔL in step S115 assuming that significant fuel efficiency evaluation can be made. Note that this predetermined vehicle speed may be equal to the predetermined threshold of the vehicle speed that is set as one of the conditions for the fuel efficiency evaluation lamp ECU 40 to turn on the lamp 40a.

After that, the control unit 20 determines whether the lamp 40a is turned on (step S120). If it is not determined that the lamp 40a is turned on, the control unit 20 skips step S125. On the other hand, if it is determined that the lamp 40a is turned on in step S120, the control unit 20 adds the travel distance to the lamp-on distance (step S125). That is, if significant fuel efficiency evaluation can be made and if the lamp 40a is turned on, the control unit 20 adds the above-described travel distance ΔL, which is added to the accumulated distance in step S100, to the lamp-on distance.

Next, the control unit 20 determines whether the accumulated distance is equal to or larger than a predetermined distance (step S130) and, until it is determined that the accumulated distance becomes equal to or larger than the predetermined distance in step S130, repeats the processing in step S100 and the subsequent steps. That is, when the accumulated distance becomes equal to or larger than the predetermined distance predefined as the distance of a unit interval, the control unit 20 leaves the loop processing, step S100 to step S130, assuming that the vehicle has traveled the unit interval.

If it is determined that the accumulated distance becomes equal to or larger than the predetermined distance in step S130, the control unit 20 determines if the evaluation distance is larger than 0 (step S135). That is, the control unit 20 determines whether there is an interval for which significant evaluation can be made while the vehicle travels in the unit interval. If it is determined that the evaluation distance is larger than 0 in step S135, the control unit 20 sets the lamp-on ratio of the lamp 40a to a value generated by dividing the lamp-on distance by the evaluation distance (step S140). On the other hand, if it is not determined that the evaluation distance is larger than 0 in step S135, the control unit 20 sets the lamp-on ratio of the lamp 40a to 0 (step S145). That is, if the evaluation distance (denominator for evaluating lamp-on ratio) is not 0, the control unit 20 calculates the lamp-on ratio based on the lamp-on distance and the evaluation distance; if the evaluation distance is 0, the control unit 20 sets the evaluation ratio to 0 because the lamp-on ratio cannot be calculated according to the definition of the lamp-on ratio. When the evaluation distance is 0, the lamp-on ratio may also be defined as non-evaluable.

Next, the control unit 20 associates the lamp-on ratio of the lamp 40a, which is set in step S140 or S145, with the position of the unit interval, for which the accumulated distance is measured, and the travel order number and stores the associated information in the storage medium 30 as the evaluation information 30b (step S150). In this case, the position of the unit interval in this case may be any information defined so that the position of the unit interval can be identified later. For example, the position of the measurement start point of the above-described accumulated distance (start point of the unit interval), the position of the measurement end point of the accumulated distance (end point of the unit interval), or the position of the mid point of the unit interval may be identified for use as the position of the unit interval. As for the travel order number, the initial number 1 is set for the evaluation information 30b that is acquired first and, after that, the travel order number is incremented each time the evaluation information 30b is acquired. By performing the processing described above, the evaluation information 30b on each unit interval can be stored in the storage medium 30. If the evaluation information acquisition processing is executed with a destination of the vehicle set, the control unit 20 stores the information, indicating the destination and the starting point, in association with the evaluation information 30b in step S150.

### (3) Evaluation information display processing

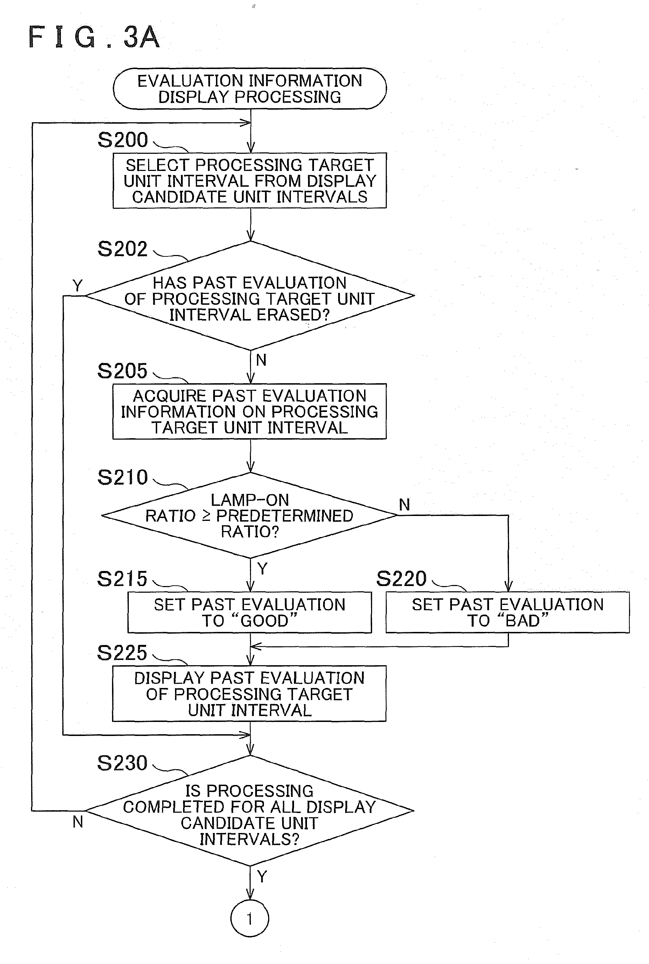

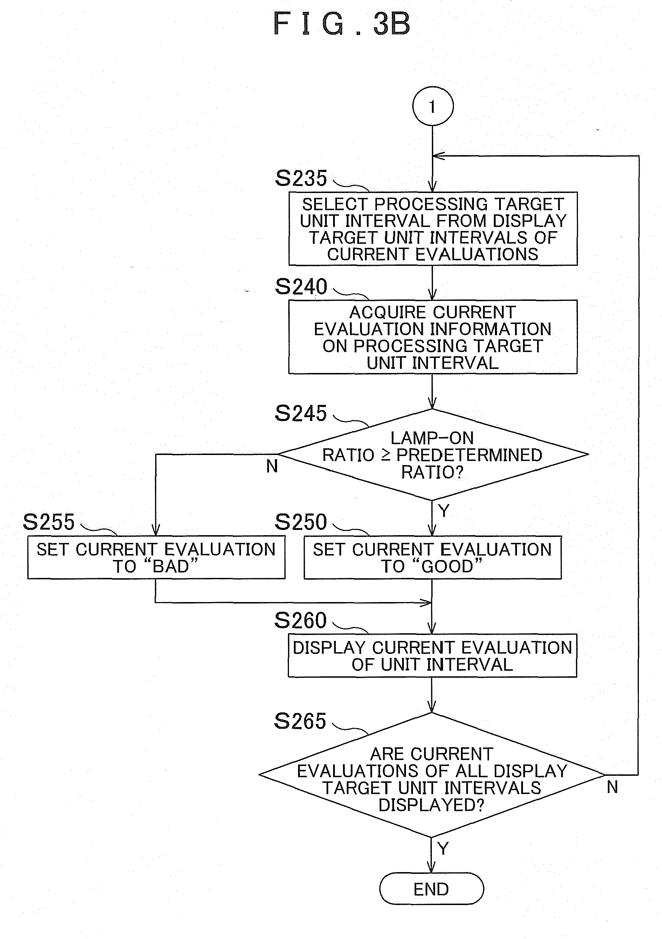

Next, the following describes the evaluation information display processing in detail. FIGS. 3A and 3B are flowcharts showing the evaluation information display processing. In this embodiment, the evaluation information display processing is executed when the driver sets a destination and when there is the evaluation information 30b on a past travel whose starting point and destination are the same as those of the current travel. The control unit 20 updates the map display on the display unit of the user I/F unit 44 at a predetermined interval and, each time the map display is updated, executes the evaluation information display processing. In addition, before the evaluation information display processing is executed, the above-described diagnostic difficulty level is already identified by a driver's instruction, by a default value, or by a travel difficulty level in each unit interval.

Steps S200 to S230, shown in FIG. 3A, form a loop processing for displaying past evaluations on the map. The control unit 20 first selects a processing target unit interval from display candidate unit intervals of past evaluations via the processing of the map display control unit 21a and the past evaluation acquisition unit 21c (step S200). Via the processing of the map display control unit 21a, the control unit 20 identifies the range of the map displayed on the display unit of the user I/F unit 44. In addition, via the processing of the past evaluation acquisition unit 21 c, the control unit 20 extracts the evaluation information 30b, whose average fuel efficiency satisfies a predetermined condition, from the evaluation information 30b associated with the same starting point and destination as those of the current travel. In addition, via the processing of the map display control unit 21 a, the control unit 20 identifies unit intervals, which are included in the range of the map displayed on the display unit of the user I/F unit 44, as the display candidate unit intervals based on the positions of the unit intervals associated with the extracted evaluation information 30b. After that, the control unit 20 selects a unit interval, one of the display candidate unit intervals for which past evaluation display processing is not yet performed and which is nearest to the vehicle's current position, as the processing target unit interval.

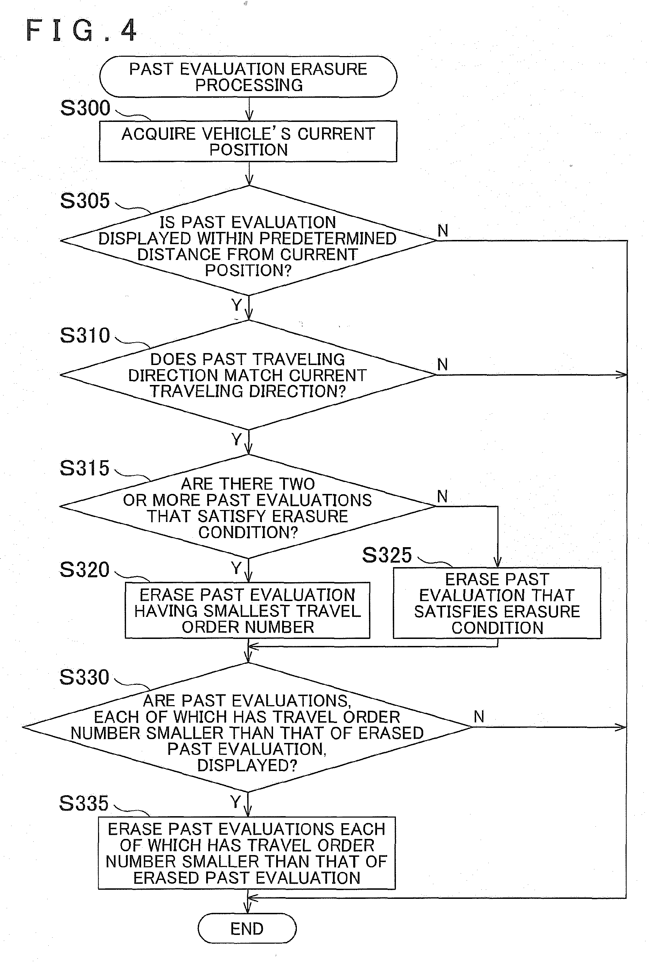

Next, via the processing of the map display control unit 21a, the control unit 20 determines whether the past evaluation of the processing target unit interval has been erased by the past evaluation erasure processing (FIG. 4) that will be described later (step S202). If it is determined that the past evaluation of the processing target unit interval is already erased, the control unit 20 skips steps S205 to S225. That is, if the past evaluation of the processing target unit interval is already erased by the past evaluation erasure processing executed during the current travel, the control unit 20 skips steps S205-S225 to prevent the past evaluation of the unit interval from being displayed again. If the past evaluation is erased, the erasure history is held until the vehicle travels to the destination during the current travel. When the vehicle arrives at the destination, the erasure history is deleted to allow the past evaluations of the unit intervals to be displayed in the next travel.

If it is not determined in step S202 that the past evaluation of the processing target unit interval is not erased, the control unit 20 acquires the past evaluation information on the processing target unit interval via the processing of the past evaluation acquisition unit 21c (step S205). The control unit 20 acquires the lamp-on ratio of the lamp 40a of the processing target unit interval during the past travel. Next, via the processing of the past evaluation acquisition unit 21c, the control unit 20 determines whether the lamp-on ratio of the lamp 40a of the processing target unit interval during the past travel is equal to or higher than a predetermined ratio (step S210). If it is determined that the lamp-on ratio of the lamp 40a is equal to or higher than the predetermined ratio in step S210, the control unit 20 sets the past evaluation of the processing target unit interval to "good" via the processing of the past evaluation acquisition unit 21c (step S215). On the other hand, if it is not determined that the lamp-on ratio of the lamp 40a is equal to or higher than the predetermined ratio in step S210, the control unit 20 sets the past evaluation of the processing target unit interval to "bad" via the processing of the past evaluation acquisition unit 21c (step S220). The predetermined ratio that is compared with the lamp-on ratio of the lamp 40a is set, according to the diagnostic difficulty level described above, such that the higher the diagnostic difficulty level is, the higher the predetermined ratio is. This means that, as the diagnostic difficulty level becomes higher, it becomes more difficult for the past evaluation to be set to "good".

Next, via the processing of the map display control unit 21a, the control unit 20 displays the past evaluation of the processing target unit interval (step S225). That is, the control unit 20 outputs the signal to the display unit of the user I/F unit 44 to draw the icon, corresponding to the past evaluation of the processing target unit interval, at the position of the processing target unit interval. As a result, the display unit of the user I/F unit 44 displays the icon, corresponding to the past evaluation, at the position of the processing target unit interval.

Next, via the processing of the map display control unit 21a, the control unit 20 determines whether the processing is completed for all display candidate unit intervals (step S230). That is, the control unit 20 determines whether the loop processing, steps S202 to S225, is performed for all display candidate unit intervals identified in step S200. If it is not determined in step S230 that the processing is completed for all display candidate unit intervals, the control unit 20 repeats the processing in step S200 and subsequent steps. As a result of the processing described above, the past evaluations are not displayed for the display candidate unit intervals that have been erased by the past evaluation erasure processing shown in FIG. 4; conversely, the past evaluations are displayed for the display candidate unit intervals that have not been erased by the past evaluation erasure processing shown in FIG. 4. On the other hand, if it is determined in step S230 that the processing is completed for all display candidate unit intervals, the control unit 20 performs processing in step S235 and subsequent steps for displaying the current evaluations. When the processing is completed for all display candidate unit intervals, the solid-line icons Etg and Etb (icons indicating current evaluations) shown in FIG. 5A are not displayed, and the broken-line icons Epg and Epb (icons indicating past evaluations) are displayed for the unit intervals ahead of the vehicle's current position.

Steps S235-S265 shown in FIG. 3B are loop processing for displaying current evaluations on the map. The control unit 20 first selects a processing target unit interval from the display target unit intervals of current evaluations via the processing of the map display control unit 21a and the current evaluation acquisition unit 21b (step S235). Via the processing of the map display control unit 21a, the control unit 20 identifies the range of the map displayed on the display unit of the user I/F unit 44. In addition, via the processing of the current evaluation acquisition unit 21b, the control unit 20 identifies unit intervals, which are associated with the evaluation information 30b stored in the storage medium 30 during the current travel and which are included in the range of the map displayed on the display unit of the user I/F unit 44, as display target unit intervals. After that, from the display target unit intervals, the control unit 20 selects a unit interval, for which current evaluation display processing is not yet performed, as the processing target unit interval.

Next, via the processing of the current evaluation acquisition unit 21b, the control unit 20 acquires the current evaluation information on the processing target unit interval (step S240). That is, the control unit 20 acquires the lamp-on ratio of the lamp 40a of the processing target unit interval during the current travel. Next, via the processing of the current evaluation acquisition unit 21b, the control unit 20 determines whether the lamp-on ratio of the lamp 40a of the processing target unit interval during the current travel is equal to or higher than a predetermined ratio (step S245). If it is determined that the lamp-on ratio of the lamp 40a is equal to or higher than the predetermined ratio in step S245, the control unit 20 sets the current evaluation of the processing target unit interval to "good" via the processing of the current evaluation acquisition unit 21b (step S250). On the other hand, if it is not determined that the lamp-on ratio of the lamp 40a is equal to or higher than the predetermined ratio in step S245, the control unit 20 sets the current evaluation of the processing target unit interval to "bad" via the processing of the current evaluation acquisition unit 21b (step S255). Note that predetermined ratio that is compared with the lamp-on ratio of the lamp 40a is equal to the predetermined ratio used in the comparison in step S210.

Next, via the processing of the map display control unit 21a, the control unit 20 displays the current evaluation of the processing target unit interval (step S260). That is, the control unit 20 outputs the signal to the display unit of the user I/F unit 44 to draw the icon, corresponding to current evaluation of the processing target unit interval, in the unit interval. As a result, the display unit of the user I/F unit 44 displays the icon corresponding to the current evaluation of the processing target unit interval.

Next, via the processing of the map display control unit 21a, the control unit 20 determines whether the current evaluations of all display target unit intervals are displayed (step S265). That is, the control unit 20 determines whether the current evaluations are displayed for all display target unit intervals identified in step S235. If it is not determined in step S265 that the current evaluations of all display target unit intervals are displayed, the control unit 20 repeats the processing of step S235 and subsequent steps. On the other hand, if it is determined in step S265 that the current evaluations of all display target unit intervals are already displayed, the control unit 20 terminates the evaluation information display processing. As a result, the current evaluations are displayed for the unit intervals behind the vehicle's current position C as shown in FIG. 5A.

### (4) Past evaluation erasure processing

Next, the following describes the past evaluation erasure processing in detail. FIG. 4 is a flowchart showing the past evaluation erasure processing. In this embodiment, after the evaluation information display processing shown in FIGS. 3A and 3B is executed for the first time, the control unit 20 executes the past evaluation erasure processing, shown in FIG. 4, via the processing of the map display control unit 21a. After that, each time the vehicle travels a preset distance (for example, the predetermined distance defining the range D shown in FIG. 5A or corresponding to the length of a unit interval), the control unit 20 executes the past evaluation erasure processing, shown in FIG. 4, via the processing of the map display control unit 21a.

In the past evaluation erasure processing, the control unit 20 acquires the vehicle's current position based on the output of the GPS receiving unit 41, vehicle speed sensor 42, and gyro sensor 43 (step S300). Next, the control unit 20 determines whether a past evaluation is displayed within the predetermined distance from the vehicle's current position on the map (step S305). That is, the control unit 20 identifies the positions of past evaluations, each displayed in step S225 in FIG. 3A, and determines whether there is a past evaluation displayed within a predetermined distance (for example, the distance on the map equivalent to 50 m in real space) from the vehicle's current position.

If it is not determined in step S305 that a past evaluation is displayed within the predetermined distance from the current position, the control unit 20 skips the steps subsequent to step S305 considering that there is no need to erase past evaluations, and terminates the past evaluation erasure processing. On the other hand, if it is determined in step S305 that a past evaluation is displayed within the predetermined distance from the current position, the control unit 20 determines whether the past traveling direction matches the current traveling direction (step S310). That is, for each of the past evaluations that are determined to be displayed within the predetermined distance from the current position, the control unit 20 determines whether the link indicating the road in which the display position is present matches the link indicating the road in which the vehicle's current position is present. If both links match, the control unit 20 determines that the past traveling direction matches the current traveling direction.

If it is not determined that the past traveling direction match the current traveling direction in step S310, the control unit 20 skips the steps subsequent to step S310 considering that there is no need to erase past evaluations and, after that, terminates the past evaluation erasure processing. On the other hand, if it is determined that the past traveling direction matches the current traveling direction in step S310, the control unit 20 determines whether there are two or more past evaluations that satisfy the erasure condition determined in steps S305 and S310 (step S315). That is, the control unit 20 determines whether there are two or more past evaluations that satisfy the following two conditions: the past evaluation is displayed within the predetermined distance from the current position and the past traveling direction matches the current traveling direction.

If it is determined in step S315 that there are two or more past evaluations that satisfy the erasure condition, the control unit 20 erases a past evaluation having the smallest travel order number (step S320). The control unit 20 references the evaluation information 30b corresponding to each of the past evaluations satisfying the erasure condition and acquires the travel order number of each past evaluation. The control unit 20 identifies the past evaluation having the smallest travel order number and, then, outputs the control signal to the user I/F unit 44 to erase the past evaluation having the smallest travel order number. As a result, the past evaluation having the smallest travel order number is erased from the display unit.

On the other hand, if it is not determined that there are two or more past evaluations that satisfy the erasure condition in step S315, that is, if there is only one past evaluation that satisfies the condition, the control unit 20 erases the past evaluation that satisfies the erasure condition (step S325). That is, the control unit 20 outputs the control signal to the user I/F unit 44 to erase the past evaluation that satisfy the erasure condition. As a result, the past evaluation that satisfies the erasure condition is erased from the display unit. Note that the information indicating the display position (position of unit interval) of a past evaluation, erased in step S320 or S325, is stored in the RAM as the erasure history information. The erasure history is held until the vehicle arrives at the destination.

Next, the control unit 20 determines whether one or more past evaluations, each of which has a travel order number smaller than that of the erased past evaluation, are displayed (step S330). If it is determined that one or more past evaluations, each of which has a travel order number smaller than that of the erased past evaluation, are displayed, the control unit 20 erases the one or more past evaluations (step S335). If it is not determined in step S330 that a past evaluation, which has a travel order number smaller than that of the erased past evaluation, is displayed, the control unit 20 skips step S335 and terminates the past evaluation erasure processing.

The control unit 20 identifies the evaluation information 30b corresponding to the past evaluation erased in step S320 or S325 and acquires the travel order number associated with the identified evaluation information 30b. The control unit 20 also identifies the evaluation information 30b corresponding to the past evaluation displayed in step S225 in FIG. 3A and acquires the travel order number associated with the identified evaluation information 30b. If the travel order number corresponding to the past evaluation displayed in step S225 in FIG. 3A is smaller than the travel order number corresponding to the past evaluation erased in step S320 or S325, the control unit 20 determines that the past evaluation, which has the travel order number smaller than that of the erased past evaluation, is displayed. After that, the control unit 20 outputs the control signal to the user I/F unit 44 to erase the past evaluation that has the travel order number smaller than that of the erased past evaluation. As a result, the past evaluation, which has the travel order number smaller than that of the erased past evaluation, is erased from the display unit.

A part of a route that the vehicle travels sometimes differs between the current travel and a past travel. While the vehicle travels a part of the route that is the same between the current travel and the past travel, the past evaluations are sequentially erased by the processing in steps S305 to S325. However, while the vehicle travels a part of the route that is different between the current travel and the past travel, the steps subsequent to step S310 are not executed with the result that past evaluations are not erased. In such a case, when the vehicle returns to the same route as that of the past travel route during the current travel, the past evaluations on the route that the vehicle will travel after returning to the route are erased by the processing in steps S305 to S325 but the past evaluations displayed on the route behind the return point are not erased by the processing of steps S305 to S325.

FIG. 5D shows an example of a road in which the road R₄ branches into two, R₄₁ and R₄₂, and the two roads run in parallel for a given distance and, then, combine again into one road, R₅. FIG. 5D shows the state in which the vehicle's current position C is present on the road R₄₁ immediately before it combines with the road R₄₂. In FIG. 5D, too, the current evaluations are indicated by the solid line, the past evaluations are indicated by the broken line, and the range D within a predetermined distance from the vehicle's current position C is indicated by the broken-line circle. In this example, it is assumed that past evaluations are displayed on the roads R₄₂ and R₅ while the vehicle travels the road R₄. In this case, when the vehicle enters the road R₄₁ from the road R₄ and travels to the current position C indicated in FIG. 5D, the past evaluations on the road R₄₂ are not erased even if the processing in steps S305 to S325 are executed. Therefore, as shown in FIG. 5D, the past evaluations remain displayed on the road R₄₂ immediately before the vehicle enters the road R₅.

After the vehicle enters the road R₅, the icon Epb₅, which indicates a past evaluation, is erased by the processing in step S325. In next step S330, it is determined that the icons Epb₄, Epb₃, Epb₂, and Epb₁, which indicate past evaluations and have travel order numbers smaller than the travel order number of the erased past evaluation, are displayed. In step S335, these icons are erased. As a result, even if the vehicle leaves a route that the vehicle traveled in the past and then returns to that route as shown in FIG. 5D, the past evaluations displayed on the route behind the return point are erased. By erasing the past evaluations in this way, the display unit can clearly show the past evaluations to be used as a guideline for traveling after the current position.

### (5) Other embodiments

The embodiment described above is an exemplary embodiment for carrying out the present invention. Other various embodiments of an evaluation display system may also be employed as long as the system performs the following two: (1) the system displays both the current evaluation and the past evaluation for each unit interval and (2) the system erases a past evaluation from the map if the distance on the map between the vehicle's current position and the display position of the past evaluation becomes equal to or smaller than a predetermined distance. For example, a current evaluation and a past evaluation may be acquired from a device not mounted in a vehicle, for example, from an information management center. The navigation terminal 10 may be mounted fixedly in a vehicle or the driver may carry the portable navigation terminal 10 for use in a vehicle.

Although the vehicle described above is a vehicle driven by an internal combustion engine, the present invention is not limited to such a vehicle. A configuration is also possible in which current evaluations and past evaluations are displayed on a map in a hybrid vehicle or an electric vehicle.

Fuel efficiency may be evaluated according to a condition for a combination of multiple elements or according to a condition for a single element (for example, value of fuel efficiency). For a hybrid vehicle that is driven using both liquid fuel and batteries, fuel efficiency may be determined to be good if the vehicle travels using only the source of power whose unit price for traveling the same distance is lower. For example, if a vehicle can travel the same distance at a lower cost when the vehicle is driven only by batteries than when the vehicle is driven by liquid fuel, fuel efficiency may be determined to be good when the vehicle is driven only by batteries without using liquid fuel. In addition to the evaluation of fuel efficiency described above, fuel efficiency in the hybrid travel mode may also be evaluated. Fuel efficiency may be evaluated at two levels as described above or at three or more levels.

Fuel efficiency evaluation may be any information that can be used as a guideline for changing fuel efficiency; for example, the information indicating the value of fuel efficiency (for example, information indicating the average fuel efficiency in a unit interval) or the information indicating the result of comparison between the base fuel efficiency and the current fuel efficiency (for example, information indicating the relative relation with the base fuel efficiency) may be used. Fuel efficiency evaluation may also be any information for evaluating whether the driver performs a driving operation to improve fuel efficiency (for example, information indicating the frequency of driving operations that will contribute to fuel efficiency improvement). For past evaluations, fuel efficiency evaluation may also be any information that can be used as a guideline for changing fuel efficiency.

A starting point and a destination, though determined when the driver explicitly specifies a destination in the configuration described above, may be determined in any of the various ways. For example, based on the operation status of the vehicle, a point at which the vehicle is determined to start and a point at which the vehicle is determined to arrive may be determined as the starting point and the destination. The destination of the current travel may also be estimated based on the current travel route or the past travel history.

The start point of the current travel interval is not limited to a particular point. For example, when a vehicle travels continuously to the current position, the start point of the continuous travel may be the start point of the current travel interval; when a vehicle travels non-continuously, for example, when the vehicle travels on different dates, the point at which the vehicle was present before arriving at the current position may be the start point of the interval. That is, the current travel interval may be defined so that the current travel and a past travel before the current travel can be distinguished for comparing the two.

In the embodiment described above, when a vehicle traveled from the same start point as that in the current travel to the same destination as that in the current travel, the travel interval is supposed to be the display target interval of past evaluations. The display target interval of past evaluations may also be determined according to another rule. That is, a past travel interval, which is displayed on the map and whose past evaluations are to be compared with the current evaluations, may be defined as the display target interval of past evaluations, in which case the fuel efficiency evaluations of the unit intervals included in that display target interval are used as past evaluations. The display target interval of past evaluations may be the whole or a part of the interval in which past evaluation information is available. For example, in the area around the current position, the past evaluations in all or a part of unit intervals, which have information via which past evaluations can be identified, may be displayed. In this case, with past fuel efficiency evaluations regularly identified and stored in a storage medium, past evaluations may be displayed for all unit intervals which are the unit intervals of a road included in the map and whose past fuel efficiency evaluations are stored in the storage medium. Alternatively, past evaluations may also be displayed by selecting a display target interval from the unit intervals whose past fuel efficiency evaluations are stored in the storage medium. In this case, if the total amount of fuel consumed in the current travel to the current position is large and if the driver wants to converse fuel consumption in the future travel, the driver should select a route so that the vehicle travels in the intervals where the total fuel consumption amount was conserved in the past travel. A route selected in this way will lead to conservation in fuel consumption.

In the embodiment described above, current evaluations and past evaluations are displayed if the starting point and the destination of the current travel are the same as those of a past travel. This configuration gives the driver a guideline for conserving total fuel consumption as compared with that in a past travel when the driver travels from a starting point to another destination in the current travel.

A unit interval, an interval for deriving a conclusion of fuel efficiency evaluation, may be an interval of a predetermined distance or an interval determined according to a predetermined rule. For example, a link that has the nearest nodes, indicated by the map information, as its ends, may be a unit interval. A unit interval whose current evaluation is displayed may or may not be the same as a unit interval whose past evaluation is displayed. That is, a unit interval needs to be determined according to a common rule but a unit interval to be displayed may be selected arbitrarily.

An erasure target past evaluation, though determined based on multiple conditions in the past evaluation erasure processing described above, may also be determined based on a smaller number of conditions. For example, steps S310 to S325 may be omitted, in which case, if a past evaluation is displayed within a predetermined distance from the vehicle's current position, the past evaluation is erased. Steps S315 to S325 may be omitted, in which case, if a past evaluation is displayed within a predetermined distance from the current position and if the past traveling direction matches the current traveling direction, the past evaluation is erased. Step S310 may be omitted, in which case, if multiple past evaluations are displayed within a predetermined distance from the current position, a past evaluation whose travel order number is smallest among the multiple past evaluations is erased and, if one past evaluation is displayed within a predetermined distance from the current position, the past evaluation is erased. Steps S330 and S335 may also be omitted.

The past traveling direction and the current traveling direction of a vehicle, which indicate the traveling direction of the vehicle in a unit interval, may be defined in various ways. For example, the traveling direction may be the average of the traveling directions when a vehicle travels in a unit interval or may be the traveling direction of a vehicle at the base position in a unit interval. Whether the past traveling direction matches the current traveling direction may be determined in such a way that, if the difference between the past traveling direction and the current traveling direction is within a predetermined range, both directions match. Various types of information may be used as the information for determining whether the past traveling direction matches the current traveling direction. For example, in step S150 described above, the information indicating a target link may be identified, the information indicating the target link may be associated with the lamp-on ratio of the lamp 40a and, then, the associated information may be stored in the storage medium 30 as the evaluation information 30b. Here, the target link is a link indicating a road where the position of a unit interval for which the lamp-on ratio of the lamp 40a is acquired is present. In addition, in step S310, the past traveling direction may be determined to match the current traveling direction if the link associated with the evaluation information 30b corresponding to the past evaluation matches the link indicating the road where the vehicle's current position is present.

A technique for displaying both a current evaluation and a past evaluation for each unit interval and for erasing, from the map, a past evaluation displayed at a position within a predetermined distance from the vehicle's current position on the map, such as the one used in the evaluation display system in the above-described embodiment, is applicable also to a program or a method. Such a system, program, and method include various modes; for example, the system, program, and method may be implemented as a standalone device, implemented by multiple devices, or implemented using parts common to the components of a vehicle. For example, the system, program, or method may be provided as a navigation system, method, or program that provides the above-described devices. The aspect of the present invention may be changed as necessary; for example, the aspect of the invention may be implemented as a combination of software and hardware. In addition, the aspect of the present invention may include a storage medium in which a program for controlling the system is stored. The storage medium may be a magnetic storage medium, an magnetooptical storage medium, or a storage medium that will be developed in future.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An evaluation display system comprising:
a map display control unit that displays a current position of a vehicle and a map around the current position on a display unit;
a current evaluation acquisition unit that acquires a current evaluation indicating a fuel efficiency evaluation of each unit interval in a current travel of the vehicle; and
a past evaluation acquisition unit that acquires a past evaluation indicating a fuel efficiency evaluation of the each unit interval in a past travel that is earlier than the current travel, wherein
the map display control unit displays the current evaluation and the past evaluation of the each unit interval on the map and, if a distance between the current position of the vehicle and a display position of at least one past evaluation on the map becomes equal to or smaller than a predetermined distance, erases the at least one past evaluation from the map.

2. The evaluation display system according to claim 1, wherein:
the past evaluation acquisition unit acquires a past traveling direction in association with the past evaluation;
the past traveling direction is a traveling direction in which the vehicle traveled the unit interval in the past travel; and
the map display control unit erases the at least one past evaluation from the map if the distance between the current position of the vehicle and the display position of the at least one past evaluation on the map becomes equal to or smaller than the predetermined distance and if the past traveling direction corresponding to the at least one past evaluation matches a current traveling direction of the vehicle.

3. The evaluation display system according to claim 1 or 2, wherein:
the past evaluation acquisition unit acquires a travel order number in association with the past evaluation;
the travel order number is set in such a way that the later the vehicle traveled in the unit interval in the past travel, the larger the travel order number is; and
if the distance between the current position of the vehicle and each of display positions of a plurality of the past evaluations becomes equal to or smaller than the predetermined distance on the map, the map display control unit erases the past evaluation of the plurality of past evaluations, with which a smallest travel order number is associated, from the map.

4. The evaluation display system according to any one of claims 1 to 3, wherein:
the current evaluation acquisition unit acquires the current evaluation in an interval from a starting point to the current position when the vehicle travels from the starting point to a destination; and
the past evaluation acquisition unit acquires the past evaluation in the past travel whose starting point and destination are the same as the starting point and the destination of the current travel.

5. The evaluation display system according to claim 4, wherein, if the at least one past evaluation is erased when the distance between the current position of the vehicle and the display position of the at least one past evaluation becomes equal to or smaller than the predetermined distance and if the past evaluation of a traveled unit interval, over which the vehicle traveled in the past travel before arriving at the unit interval corresponding to the at least of one of past evaluations, is displayed, the map display control unit erases the past evaluation of the traveled unit interval from the map.

6. An evaluation display method comprising:
displaying a current position of a vehicle and a map around the current position on a display unit;
acquiring a current evaluation indicating a fuel efficiency evaluation of each unit interval in a current travel of the vehicle;
acquiring a past evaluation indicating a fuel efficiency evaluation of the each unit interval in a past travel that is earlier than the current travel;
displaying the current evaluation and the past evaluation of the each unit interval on the map; and
if a distance between the current position of the vehicle and a display position of at least one past evaluation on the map becomes equal to or smaller than a predetermined distance, erasing the at least one past evaluation from the map.

7. A non-transitory computer-readable storage medium that stores computer-executable instructions for performing an evaluation display function comprising:
displaying a current position of a vehicle and a map around the current position on a display unit;
acquiring a current evaluation indicating a fuel efficiency evaluation of each unit interval in a current travel of the vehicle;
acquiring a past evaluation indicating a fuel efficiency evaluation of the each unit interval in a past travel that is earlier than the current travel;
displaying the current evaluation and the past evaluation of the each unit interval on the map; and
if a distance between the current position of the vehicle and a display position of at least one past evaluation on the map becomes equal to or smaller than a predetermined distance, erasing the at least one past evaluation from the map.
